# EUROPÄISCHE PATENTSCHRIFT

(11) **EP 3 275 733 B1**
(45) Veröffentlichungstag und Bekanntmachung des Hinweises auf die Patenterteilung: **09.10.2019**
(21) Anmeldenummer: 17181590.5
(22) Anmeldetag: 17.07.2017
(51) Int. Cl.: B60Q 1/04

(54) **SCHEINWERFERBEFESTIGUNGSSYSTEM FÜR KRAFTFAHRZEUGE UND VERFAHREN**
HEADLIGHT FIXING SYSTEM FOR MOTOR VEHICLES AND METHOD
SYSTÈME DE FIXATION DE PHARES POUR VÉHICULES AUTOMOBILES ET PROCÉDÉ

(30) Priorität: 29.07.2016 DE 102016214082
(43) Veröffentlichungstag der Anmeldung: 31.01.2018
(73) Patentinhaber: Ford Global Technologies, LLC, Dearborn, MI 48126 (US)
(72) Erfinder: Niessen, Bert, 52396 Heimbach (DE); Herrmann, Boris, 50739 Köln (DE); Witschel, Mark, 50767 Köln (DE); Warwel, Thorsten, 47058 Duisburg (DE)
(74) Vertreter: Dörfler, Thomas

(56) Entgegenhaltungen:
- DE-A1-102010 038 569
- DE-U1-202008 002 633
- FR-A1- 2 727 479

## Beschreibung

Die Erfindung betrifft ein Scheinwerferbefestigungssystem für ein Kraftfahrzeug zur Befestigung und Ausrichtung einer Scheinwerferstruktur an zwei Trägerstrukturen des Kraftfahrzeugs, insbesondere an Kotflügelbefestigungsstruktur und Kühlerträgerstruktur, bezüglich von drei zueinander senkrecht stehenden Raumrichtungen, insbesondere der x-, y- und z-Richtung des Fahrzeugs, mit einem einwertigen Ausrichteelement zur Befestigung und Ausrichtung der Scheinwerferstruktur in z-Richtung an einer der Trägerstrukturen.

Üblicherweise erfolgt bei einem derartigen Scheinwerferbefestigungssystem die Befestigung und Ausrichtung der Scheinwerferstruktur nach der so genannten 3-2-1-Regel, gemäß der die Scheinwerferstruktur an drei Punkten an den beiden Trägerstrukturen des Kraftfahrzeugs ausgerichtet und befestigt wird. Hierbei erfolgt beispielsweise bei der Kotflügelbefestigungsstruktur als eine der Trägerstrukturen eine erste Befestigung über ein sogenanntes 3-wertiges Ausrichteelement hinsichtlich der x-, y- und z-Richtungen und bei der Kühlerträgerstruktur als die andere der Trägerstrukturen eine zweite Befestigung über ein sogenanntes zweiwertiges Ausrichteelement hinsichtlich der y- und z-Richtungen, wobei in der üblichen Verwendung von Schrauben im letzteren Falle mit der Festlegung der Schrauben auch eine Bewegung in x-Richtung unterbunden wird.

Somit soll die mittels des einwertigen Ausrichteelements durchgeführte dritte Befestigung die Scheinwerferstruktur lediglich in z-Richtung ausrichten und ihr keine Position in x-und y-Richtung aufzwingen, da das System nach der 3-2-1-Regel bereits vollständig statisch bestimmt ist. Eine Überbestimmung bei der dritten Befestigung würde nachteilig zu einem verschlechterten Spalt- und Passungsbild der Strukturen führen. Ferner drohte die Gefahr von Spannungsbrüchen in der Scheinwerferstruktur, da die Scheinwerferstruktur durch die Überbestimmung insbesondere auf Biegung belastet werden würde. Daher wird der dritten Befestigung üblicherweise als "Kompromiss" eine Spielfreiheitfreiheit von etwa +/- 3 mm bezüglich der x-Richtung und der y-Richtung eingeräumt. Dieser Kompromiss hat zwei wichtige Nachteile: Zum einen läuft die Scheinwerferstruktur Gefahr, beim Kraftfahrzeugbetrieb ein starkes Scheinwerferzittern zu entwickeln. Zum anderen kann die Scheinwerferstruktur die Kotflügelanbindung strukturell nicht unterstützen, weil bei einer Belastung auf Kotflügelbefestigungsstruktur oder an die hieran gekoppelte Stoßfängerschale als Erstes die +/- 3 mm-Spielfreiheit aufgezehrt werden.

Aus der DE 10 2010 038 569 A1 ist eine Vorrichtung zur Einstellung einer Fuge zwischen einem ersten Anbauteil und einem zweiten Anbauteil eines Fahrzeugs bekannt. Diese Vorrichtung besteht aus einem winkelförmigen Einstellelement, das mit einer ersten Anlagefläche mit dem ersten Anbauteil und mit einer zweiten Anlagefläche mit dem zweiten Anbauteil verbindbar ist. Ferner ist ein zweites winkelförmiges Einstellelement vorgesehen, das um eine Drehachse schwenkbar zu dem ersten Einstellelement gelagert ist. Das zweite winkelförmige Einstellelement weist eine erste Anlagefläche auf, die zusammen mit der ersten Auflagefläche des ersten winkelförmigen Einstellelements einen Aufnahmeschlitz bildet zur Aufnahme eines Randes des ersten Anbauteils. Das zweite winkelförmige Einstellelement ist mit einer zweiten Anlagefläche versehen, die unter Anlage an der zweiten Anlagefläche des ersten winkelförmigen Einstellelements kraftschlüssig mit dem zweiten Anbauteil verbindbar ist, wobei das erste Anbauteil in dem Aufnahmeschlitz klemmend gehalten ist. Mit einer solchen Einstellvorrichtung ist eine Ausrichtung der miteinander zu verbindenden Bauteile nur in zwei Dimensionen möglich. Darüber hinaus ist es erforderlich, dass zum Zusammenfügen der beiden Bauteile eine Verbindung mittels einer Schraube erforderlich ist, mit der das zweite winkelförmige Einstellelement in seine Klemmposition gebracht und in dieser Position gehalten wird. Bei dieser bekannten Konstruktion wird also die feste Verbindung nur durch eine gesonderte Schraube erreicht. Eine solche Konstruktion weist den Nachteil auf, dass im Servicefall möglicherweise kein Zugang zu der Schraube möglich ist und somit die Befestigung nicht gelöst werden kann.

Aus der DE 20 2008 002 633 U1 ist eine Befestigungsanordnung mit selbsttätigem dreidimensionalem Toleranzbereich bekannt. Diese Befestigungsanordnung besteht aus einem festliegenden Trägerteil sowie einem Anbauteil, das an dem Trägerteil durch einen Montagevorgang unter selbsttätigem dreidimensionalem Ausgleich von Toleranzen in der Lage des Anbauteils relativ zu dem Trägerteil befestigbar ist. Bei dem Montagevorgang wird das Anbauteil durch eine Zustellbewegung längs einer zentralen Achse in eine vorgegebene Position relativ zu dem Trägerteil bewegt. Ferner ist ein Trägerteil-Rastglied aus Kunststoff und ein Anbauteil-Rastglied aus Kunststoff vorgesehen, wobei das Trägerteil- Rastglied an dem Trägerteil so angebracht ist, dass es von dem Montagevorgang in einer Radialebene schwimmend beweglich gelagert ist. Das Anbauteil- Rastglied weist einen längs der zentralen Achse verlaufenden Rastdorn mit einem mehreckigen Querschnitt auf, an dessen Längsseiten Zahnreihen gebildet sind. Das Anbauteil-Rastglied weist ferner einen Befestigungsabschnitt auf, der an dem Anbauteil unlösbar befestigt und mit dem Rastdorn lösbar verbunden ist. Zum lösbaren Verbinden des Befestigungsabschnitts mit dem Rastdorn ist eine Schraube vorgesehen, die durch zentrale Löcher des Rastdorns und des Befestigungsabschnitts verläuft und mit einer Mutter verschraubt ist, um den Rastdorn mit dem Befestigungsabschnitt zu verspannen. Auch bei dieser bekannten Konstruktion besteht der Nachteil, dass zum Erreichen der festen Verbindung eine gesonderte Schraube erforderlich ist. Diese muss im Servicefall leicht zugänglich sein, um das entsprechende Anbauteil lösen zu können. Dies ist aber in vielen Fällen nicht möglich.

Ferner ist aus der FR 2 727 479 A1 eine Befestigungsvorrichtung bekannt, mit der ein erstes Bauteil an einem zweiten Bauteil ausgerichtet und befestigt werden kann. Auch bei dieser Konstruktion ist die Befestigung nur mittels einer gesonderten Schraube möglich.

Eine Aufgabe der Erfindung ist, ein gattungsgemäßes Befestigungssystem bereitzustellen, bei dem das einwertige Ausrichteelement zumindest im Wesentlichen spannungsfrei, ohne Spiel und ohne Verwendung weiteren Werkzeugs an den zu verbindenden Strukturen festlegbar ist.

Die gestellte Aufgabe wird erfindungsgemäß durch die Merkmale des Anspruches 1 gelöst. Vorteilhafte Weiterbildungen werden in den Unteransprüchen beschrieben.

Die erfindungsgemäße Lösung zeichnet sich dadurch aus, dass das Scheinwerferbefestigungssystem so ausgelegt ist, dass die zu verbindenden Strukturen über das einwertige Ausrichteelement in einer Ausrichtungsposition bezüglich der Raumrichtungen, insbesondere der x-, y,- und z-Richtung des Fahrzeugs, relativ verschieblich zueinander gehalten angeordnet sind, dass das Überführen des Ausrichteelements aus der Ausrichtungsposition in eine Festlegungsposition zur Ausrichtung und Festlegung der Strukturen in z-Richtung gleichzeitig deren Festlegung in x-Richtung und y-Richtung bewirkt, dass das Ausrichteelement zur Ausrichtung in z-Richtung in der Ausrichtungsposition die zu verbindenden Strukturen bezüglich der xy-Ebene lose bleibend zueinander ausrichtet, dass an der einen Trägerstruktur oder der Scheinwerferstruktur eine Ausrichtungsaufnahme vorgesehen ist und dass das Ausrichteelement in der Ausrichtungsposition bezüglich der xy-Ebene verschieblich und bezüglich der z-Achse klammerartig in die Ausrichtungsaufnahme eingreift und in der Festlegungsposition mit Schließen des klammerartigen Eingriffs an der Ausrichtungsaufnahme festgelegt angeordnet ist.

Die Festlegung des Ausrichteelements an den Strukturen in z-Richtung löst somit zugleich dessen Festlegung bezüglich der xy-Ebene aus. Dadurch, dass die zu verbindenden Strukturen über das einwertige Ausrichteelement in einer Ausrichtungsposition bezüglich der Raumrichtungen, insbesondere der x-, y,- und z-Richtung des Fahrzeugs, relativ verschieblich zueinander gehalten angeordnet sind, kann diese Ausrichtung in z-Richtung unter gleichzeitiger Verschiebung bezüglich der xy-Ebene erfolgen, so dass hinsichtlich dieser xy-Ebene kein Spannungsaufbau und damit keine Verspannung der Scheinwerferstruktur auftreten kann. In der Festlegungsposition ist das Ausrichteelement unter Verbindung der zu verbindenden Strukturen fest mit denselben verbunden angeordnet. Dadurch, dass die Festlegung des Ausrichteelements und damit die Durchführung der dritten Befestigung mit der Überführung des Befestigungselements aus seiner bezüglich der xy-Ebene spannungsfreien oder im Wesentlichen spannungsfreien Ausrichtungsposition in die Befestigungsposition simultan erfolgt, treten in der Befestigungsposition in der Verbindung der beiden zu verbindenden Strukturen hinsichtlich der xy-Ebene keine Verspannungen auf. Die Festlegung des Ausrichteelements an den Strukturen kann, wie weiter unten noch näher beschrieben, durch eine Steck/Rast-Verbindung erfolgen, zu deren Herstellung es keines Werkzeuges bedarf.

Vorteilhaft kann das Ausrichteelement zur Ausrichtung in z-Richtung in einer Ausrichtungsposition die zu verbindenden Strukturen bezüglich der xy-Ebene und bezüglich der z-Richtung lose bleibend zueinander ausrichten. Insbesondere kann das Ausrichteelement zur Ausrichtung in z-Richtung in einer Ausrichtungsposition ausgerichtet werden, in der es bezüglich der xy-Ebene und bezüglich der z-Richtung lose bleibend an der einen Trägerstruktur und an der Scheinwerferstruktur gehalten angeordnet ist. Diese lose bleibende Anordnung des Ausrichteelements heißt, dass die zu verbindenden Strukturen lose miteinander verbunden sind. Insbesondere sind die zu verbindenden Strukturen in der Ausrichtungsposition zumindest im Wesentlichen spannungsfrei relativ zueinander angeordnet. Insbesondere sind die zu verbindenden Strukturen in der Ausrichtungsposition unter Ausbildung eines bestimmten Spiels hinsichtlich der Raumrichtungen bzw. der x-, y- und/oder z-Richtung angeordnet. Hierbei kann dieses Spiel bezüglich der Raumrichtungen unterschiedlich ausgelegt sein. Insbesondere können die zu verbindenden Strukturen in der Ausrichtungsposition über das Ausrichteelement in z-Richtung aneinander anliegend angeordnet sein.

Hinsichtlich der xy-Ebene können die zu verbindenden Strukturen über das Ausrichteelement mit einem sehr großen Spiel von bis +/- 3mm oder bis +/- 4mm und mehr relativ zueinander verschieblich angeordnet sein. Es kann vor der Festlegung die Ausrichtung der Strukturen relativ zueinander bezüglich der z-Richtung erfolgen, während simultan hierzu eine Bewegung zum Ausgleich beispielsweise von Toleranzen oder Montagefehlern parallel zur xy-Ebene innerhalb des sehr großen Spiels von bis +/-3 mm oder bis +/- 5mm und mehr erfolgen kann. Es können die zu verbindenden Strukturen in der Ausrichtungsposition bezüglich aller Raumrichtungen spannungsfrei zueinander angeordnet sein. Sie haben sich in der Ausrichtungsposition darüber hinaus in z-Richtung zum Ausgleich beispielsweise von Toleranzen oder Montagefehlern notwendigen Maß bezüglich der xy-Ebene so relativ zueinander bewegt, dass sie bezüglich der xy-Ebene und der z-Richtung zumindest im Wesentlichen spannungsfrei zueinander angeordnet sind. Mit dieser spannungsfreien Positionierung der zu verbindenden Strukturen zueinander erfolgt die Festlegung des Ausrichteelements hinsichtlich der z-Richtung an den zu verbindenden Strukturen und simultan hierzu die Festlegung des Ausrichteelements an den zu verbindenden Strukturen hinsichtlich der xy-Ebene. Im Wesentlichen spannungsfrei bezieht sich hier darauf, dass nicht auszuschließen ist, dass noch sehr geringe Spannungsanteile infolge von Haft- und/oder Gleitreibung durch weiter unten beschriebene Ausrichtungsvorgänge zwischen Ausrichtungselement und den Strukturen übrigbleiben. Es wird jedoch beansprucht, dass diese Reibung, sofern sinnvoll, durch übliche Methoden minimiert wird.

Zum Erhalt der Spannungsfreiheit kann vorgesehen sein, dass das Ausrichteelement aus der Ausrichtungsposition in eine Festlegungsposition überführbar angeordnet ist, in der es bezüglich aller drei Raumrichtungen (x,y,z) gleichzeitig an der Scheinwerferstruktur und der einen Trägerstruktur festgelegt angeordnet ist. Es kann in der Festlegungsposition bezüglich aller drei Raumrichtungen (x,y,z) gleichzeitig an der Scheinwerferstruktur und der einen Trägerstruktur festlegbar bzw. festgelegt angeordnet sein. Die Festlegung kann bezüglich der drei Raumrichtungen simultan erfolgen.

Die zu verbindenden Strukturen können über das Ausrichteelement beabstandet zueinander angeordnet sein. Konstruktiv günstig können die Verbindung des Ausrichteelements mit der einen Trägerstruktur und die Verbindung des Ausrichteelements mit der Scheinwerferstruktur an insbesondere zur z-Richtung oder Eingriffsrichtung zueinander beabstandeten Orten des Ausrichteelements angeordnet sein. Dies erleichtert die Ausbildung unterschiedlicher Verbindungstypen an den Orten.

In einer vorteilhaften Ausführungsform des Scheinwerferbefestigungssystems kann an der einen Trägerstruktur oder an der Scheinwerferstruktur eine Ausrichtungsaufnahme für den Eingriff des Ausrichtungselements vorgesehen sein. Hierbei kann das Ausrichteelement in Ausrichtungsposition bezüglich der xy-Ebene verschieblich und bezüglich der z-Achse mit vorzugsweise geringem Spiel in der Ausrichtungsaufnahme angeordnet sein. Diese Verschieblichkeit bezüglich der xy-Ebene kann +/-3 mm, bis +/- 4mm oder mehr betragen. Hierbei kann das Ausrichteelementbezüglich der z-Achse insbesondere einen einer Basis feststehenden Bereich der Ausrichtungsaufnahme klammerartig vorzugsweise mit Spiel umgreifend angeordnet sein. Mit der Bewegung des Ausrichteelements aus der Ausrichtungsposition in die Festlegungsposition hinein, kann ein Schließen der klammerartigen Umgreifung so erfolgen, dass das Ausrichteelement in der Ausrichtungsaufnahme festgelegt ist. Da vor der Festlegung ein spannungsfreies Ausrichten der Trägerstrukturen zueinander über das Ausrichteelement vorgesehen ist, kann die Festlegung unschädlich ohne jegliches Spiel erfolgen.

In einer vorteilhaften Weiterbildung des Scheinwerferbefestigungssystems kann das Ausrichteelement zu seiner klammerartigen Umgreifung, bezüglich einer Eingriffsrichtung parallel oder etwa parallel zur z-Richtung, ein vorderes Klammerteil und ein hinteres Klammerteil aufweisen. Insbesondere kann das vordere Klammerteil als ein in Eingriffsrichtung wirksamer Anschlag ausgebildet sein.

In einer Weiterbildung kann sich zumindest der als Anschlag wirkende Teil des vorderen Klammerteils bezüglich der Eingriffsrichtung radial nach außen von dem Ausrichteelement erstreckend angeordnet sein. Vorteilhaft kann sich der Anschlag bezüglich der Eingriffsrichtung zumindest über einen oder mehreren Umfangsabschnitten, vorzugsweise vollumfänglich, radial nah außen von dem Ausrichteelement weg erstrecken. Konstruktiv unaufwändig kann der Anschlag plattenförmig ausgebildet sein. Damit kann, kraftmechanisch günstig, der Anschlag mit einer in Eingriffsrichtung weisenden Anschlagsfläche flächig an einer in der Ausrichtungsaufnahme vorgesehenen Anlagefläche zur Anlage kommen.

Das Ausrichteelement kann zu seiner Ausrichtung relativ zu den verbindenden Strukturen eine Hebelvorrichtung mit einem Hebel aufweisen. Die Hebelvorrichtung kann kraftübertragungswirksam einerseits in die an der Trägerstruktur bzw. der Scheinwerferstruktur vorgesehene Ausrichtungsaufnahme und, in Einbaulage vorzugsweise in Eingriffsrichtung beabstandet hierzu, anderseits in eine an der Scheinwerferstruktur bzw. der Trägerstruktur vorgesehene Festlegungsaufnahme eingreifend angeordnet sein. Es können hierüber Kräfte von der einen Struktur zu der anderen Struktur übertragen werden. Die Kraftübertragung kann in der Festlegungsposition, ferner auch in der Ausrichtungsposition erfolgen. Die Kraftübertragung kann über den Hebel erfolgen.

Der Hebel kann als Kipphebel ausgebildet sein. Dieser kann jeweils endseitig in die Aufnahmen eingreifen. Konstruktiv vorteilhaft einfach, kann das hintere Klammerteil des Ausrichteelements durch zumindest vorzugsweise als Kipphebel ausgeführten Hebel der Hebelvorrichtung gebildet sein. Der Kipphebel kann in der Festlegungsposition die zu verbindenden Strukturen kraftübertragungswirksam verbindend angeordnet sein. Insbesondere kann der Kipphebel in Zusammenwirken mit dem Anschlag kraftübertragungswirksam so an den beiden zu verbindenden Strukturen angreifen, dass das Ausrichteelement in der Festlegungsposition an diesen beiden Strukturen festgelegt angeordnet ist. Die beiden Strukturen in der Ausrichtungsposition des Ausrichteelements sind über dasselbe über einen bestimmten Wegbereich bezüglich der drei Raumrichtungen, insbesondere der x-, y,- und z-Richtung des Fahrzeugs, relativ zueinander bewegbar und mit dem Erreichen der Festlegungsposition aus der Ausrichtungsposition heraus simultan über das Festlegungselement aneinander festgelegt angeordnet.

Der Kipphebel kann in einer Schwenkachse senkrecht zur z-Richtung schwenkbeweglich an dem Ausrichteelement, insbesondere an dem vorderen Klammerteil, gehalten angeordnet sein. Die Schwenkachse kann beispielsweise als eigenständiges Bauteil an dem vorderen Klammerteil gelagert angeordnet sein. Insbesondere kann das Ausrichteelement im Wesentlichen aus dem zumindest einen Kipphebel, dem vorderen Klammerteil und der Schwenkachse aufgebaut sein. Unter Reduzierung der Bauteile auf zwei Bauteile, den Kipphebel und das vordere Klammerteil, kann die Schwenkachse durch an einem der Bauteile vorgesehene zueinander fluchtende Zapfen gebildet werden, die in an dem anderen Bauteil vorgesehene Lageröffnungen eingreifen.

Das Ausrichteelement kann einstückig ausgebildet sein. Hierzu kann die Schwenkachse als Torsionsachse ausgebildet sein, die einstückig mit dem vorderen Klammerteil und dem hinteren Klammerteil verbunden angeordnet ist. Hierbei kann die Schwenkbewegung des hinteren Klammerteils zumindest zum überwiegenden Teil durch Torsion der Schwenkachse erfolgen.

Der Kipphebel kann zwei von der Schwenkachse ausgehende winklig, insbesondere senkrecht zueinander angestellte Hebelarme, d.h. einen ersten Hebelarm und einen zweiten Hebelarm, aufweisen. Der erste Hebelarm kann in der Festlegungsposition kraftübertragungswirksam in die Ausrichtungsaufnahme der einen Trägerstruktur bzw. der Scheinwerferstruktur eingreifend angeordnet sein. Auch der zweite Hebelarm kann in der Festlegungsposition kraftübertragungswirksam in eine an der Scheinwerferstruktur bzw. der Trägerstruktur vorgesehene Festlegungsaufnahme eingreifend angeordnet sein.

Der Kipphebel kann somit in der Ausrichtungsposition und in der Festlegungsposition kraftübertragungswirksam in beide Aufnahmen eingreifen. Hierbei kann der Eingriff des Kipphebels in der Ausrichtungsposition unter Bildung des oben beschriebenen Spiels erfolgen. Vorzugsweise dient der erste Hebelarm in der Ausrichtungsposition als Anschlag zur Spielbegrenzung des Ausrichteelements gegen Eingriffsrichtung. Damit kann das Spiel, mit dem das Ausrichteelement in der Ausrichtungsposition in die Ausrichtungsaufnahme eingreift, mittels der zur z-Richtung axialen Beabstandung des oben beschriebenen Anschlags zu dem des ersten Hebelarms eingestellt werden.

Konstruktiv vorteilhaft einfach kann die Ausrichtungsaufnahme eine Durchgangsöffnung aufweisen. Hierbei kann der erste Hebelarm des Kipphebels die Durchgangsöffnung in Eingriffsrichtung durchragen. Der erste Hebelarm kann gegen Eingriffsrichtung in der Ausrichtungsposition zumindest mit Spiel beabstandet zu einer die Durchgangsöffnung in Eingriffsrichtung hinteren Seitenfläche angeordnet sein. Hierdurch kann eine Verschieblichkeit des Ausrichteelements relativ zu der einen Trägerstruktur bzw. der Scheinwerferstruktur erzielt werden. Ferner kann der erste Hebelarm in der Festlegungsposition derselben form-, kraft- und/oder stoffschlüssig insbesondere unter elastischer Verspannung an der einen Trägerstruktur bzw. der Scheinwerferstruktur anliegen.

Der erste Hebelarm kann bezüglich der z-Richtung einen länglichen Querschnitt aufweisen, an den der Öffnungsquerschnitt der Durchgangsöffnung vorzugsweise mit Übermaß angepasst ausgebildet ist. Dies ermöglicht auf einfache Weise, den ersten Hebelarm in Einsetzrichtung durch die Durchgangsöffnung in die Ausrichtungsaufnahme einzusetzen. Hierzu kann der erste Hebelarm mit seinem Querschnitt fluchtend zum Öffnungsquerschnitt der Durchgangsöffnung durch dieselbe in eine Einsatzposition hineingebracht werden, wobei das Ausrichteelement in der Einsatzposition mit seinem vorderen Klemmteil in Eingriffsrichtung vorn an der Seitenfläche, in der die Durchgangsöffnung eingebracht ist, anschlägt. Das oben beschriebene plattenförmige vordere Klammerteil kann hinsichtlich seiner Erstreckung in xy-Ebene so an den Öffnungsquerschnitt der Durchgangsöffnung abgestimmt sein, dass es in keiner Drehstellung des Ausrichteelements relativ zur Durchgangsöffnung durch dieselbe geführt werden kann.

In einem weiteren Schritt kann das Ausrichteelement unter einer Drehbewegung umfänglich zur z-Richtung um einen Drehwinkel von vorzugsweise 90° aus der Einsatzposition in die Ausrichtungsposition gebracht werden. In der Ausrichtungsposition untergreift der erste Hebelarm den in Einsetzrichtung hinteren Öffnungsrand der Durchgangsöffnung so, dass der erste Hebelarm gegen die Einsetzrichtung in der Ausrichtungsaufnahme mit Spiel gehalten angeordnet ist. Ferner kann der Öffnungsquerschnitt der Durchgangsöffnung gegenüber dem ersten Hebelarm ein Übermaß aufweisen, durch das der erste Hebelarm und damit das Ausrichteelement bezüglich der xy-Ebene relativ zur Durchgangsöffnung in derselben verschieblich gelagert sind. Diese Relativbewegung in xy-Ebene kann durch die radiale Begrenzung der Durchgangsöffnung begrenzt werden.

In einem dritten Schritt kann der erste Hebelarm als hinteres Klammerteil über die Betätigung des Kipphebels an dem zweiten Hebelarm in Richtung in einer Festlegungsdrehrichtung zu dem vorderen Klammerteil hin und damit gegen die in Eingriffsrichtung hintere Seitenfläche gepresst werden, in der die Durchgangsöffnung einmündet. Damit wird das Ausrichteelement an der einen Trägerstruktur festgelegt.

Die Betätigung des Kipphebels kann durch eine Krafteinleitung in den zweiten Hebelarm erfolgen, indem dieser gegen die Eingriffsrichtung in eine an der Scheinwerferstruktur bzw. an einer der Trägerstrukturen vorgesehene Festlegungsaufnahme eingreift. Konstruktiv einfach kann die Festlegungsaufnahme als Rastaufnahme ausgebildet sein, wobei sie für den Eingriff des zweiten Hebelarms vorzugsweise unter Ausbildung einer Rampe trichterartig geöffnet ausgebildet ist.

Zur Zentrierung des Ausrichteelements bezüglich der xy-Ebene und/oder zur Betätigung des Kipphebels kann an dem zweiten Hebelarm und/oder an der Rastaufnahme jeweils ein Führungsbereich mit der Rampe vorgesehen sein. Diese kann, am zweiten Hebelarm angeordnet, mit einer Richtungskomponente gegen eine vorgesehene Verschwenkrichtung des ersten Hebelarms des Kipphebels zur pressenden Anlage gegen die Durchgangsöffnung und, im Führungsabschnitt der Rastaufnahme angeordnet, mit einer Richtungskomponente in diese vorgesehene Verschwenkrichtung weisen. Mit dem Abgleiten an diesen Rampen kann bezüglich der xy-Ebene die Zentrierung und damit Feinjustierung der relativen Lage des Ausrichteelements zu den zu verbindenden Strukturen erfolgen. Ferner wird zum Ende der Ausrichtung des Ausrichtungselements in der xy-Ebene der oben beschriebene dritte Schritt ausgelöst, bei dem die Klemmteile zueinander bewegt und sich damit an der einen Befestigungsstruktur festklemmen, wodurch das Ausrichteelement form-, kraft- und/oder stoffschlüssig vorzugsweise unter elastischer Vorspannung an der einen Trägerstruktur festgelegt wird.

Somit kann mit dem Aufsetzen der Rastaufnahme vorzugsweise über den freien Endbereich des zweiten Hebelarms die Festlegung der zu verbindenden Strukturen bezüglich der Raumrichtungen gleichzeitig erfolgen. Zur Stabilisierung der Verbindung der beiden Strukturen über das Ausrichteelement kann vorgesehen sein, dass die Rastaufnahme in der Festlegungsposition in Einsetzrichtung mittelbar beispielsweise über ein vorzugsweise hohlzylindrisches Beabstandungselement oder unmittelbar beispielsweise über einen oder mehreren sich in Einsetzrichtung von der Rastaufnahme weg erstreckenden Vorsprüngen vorzugsweise stumpf und/oder in an dem plattenförmigen Anschlag vorgesehene Vertiefungen eingreifend an dem plattenförmigen Anschlag anliegt. In beiden Fällen ist es vorteilhaft, das Ausrichteelement koaxial innen zum Beabstandungselement bzw. den Vorsprüngen anzuordnen.

Kraftmechanisch und hinsichtlich der Stabilität günstig, kann vorgesehen sein, dass das Ausrichteelement zwei vorzugsweise gleich wirkende Kipphebel aufweist. Diese können bezüglich der Eingriffsrichtung radial einander gegenüberliegend sowie insbesondere radial beabstandet zueinander angeordnet sein. Insbesondere können die beiden Kipphebel in Festlegungsposition bezüglich der zweiten Hebelarme parallel zueinander angeordnet sein. Die ersten Hebelarme der beiden Kipphebel können in Festlegungsposition ferner bezüglich der Eingriffsrichtung radial voneinander weg weisend oder sich radial überkreuzend angeordnet sein. Sie können zur Begrenzung der Drehbewegung gegen Festlegungsdrehrichtung aneinander anschlagen.

Zur Befestigung und Ausrichtung einer Scheinwerferstruktur an zwei Trägerstrukturen des Kraftfahrzeugs, insbesondere an der Kotflügelbefestigungsstruktur und der Kühlerträgerstruktur, bezüglich der drei Raumrichtungen, insbesondere der x-, y-und z-Richtung des Fahrzeugs wird ein Scheinwerfersystem bereitgestellt, das bei der Montage folgende Schritte aufweist:
- Anordnen des Ausrichteelements an den zu verbindenden Strukturen in einer Ausrichtungsposition, in der es die zu verbindenden Strukturen bezüglich der xy-Ebene und bezüglich der z-Richtung (z) zumindest im Wesentlichen spannungsfrei relativ zueinander ausrichtet, und
- Überbringen des Ausrichteelements aus der Ausrichtungsposition in eine Festlegungsposition, in der es bezüglich aller drei Raumrichtungen (x,y,z) gleichzeitig an beiden zu verbindenden Strukturen festgelegt wird.

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
- Fig. 1: eine perspektivische Draufsicht auf eine übliche Kotflügelbefestigungsstruktur und übliche Kühlerträgerstruktur mit eingezeichneten Befestigungspunkten nach der 1-2-3-Regel,
- Fig. 2: eine perspektivische Draufsicht auf eine übliche Scheinwerferstruktur mit eingezeichneten Befestigungspunkten wie in Figur 1,
- Fig. 3a und 3b: jeweils in einer Einzeldarstellung eine Seitenansicht bzw. eine Aufsicht auf eine erste Ausführungsform eines Ausrichteelements eines Scheinwerferbefestigungssystem,
- Fig. 4: eine Detailansicht eines drehbar gelagerten Kipphebel des Ausrichteelements gemäß Figur 3,
- Fig. 5: eine Längsschnittansicht einer hier an der Scheinwerferstruktur vorgesehenen Festlegungsaufnahme,
- Fig. 6a: eine Längsschnittansicht des Scheinwerferbefestigungssystem mit einer Längsschnittansicht der Festlegungsaufnahme gemäß Figur 5 und einer Seitenansicht des Ausrichteelements gemäß Figur 3 a, das in einer xx-Ebene senkrecht zur Bildebene verschieblich an einer Durchgangsöffnung einer hier an der Kotflügelbefestigungsstruktur vorgesehene Ausrichtungsaufnahme angeordnet ist,
- Fig. 6b: eine Längsschnittansicht des Scheinwerferbefestigungssystem wie in Figur 6a, jedoch hier in einer Ausrichtungsposition,
- Fig. 7: eine Längsschnittansicht des Befestigungssystem in der Festlegungsposition des hier in einer anderen Ausführungsform dargestellten Ausrichteelements in den Aufnahmen,
- Fig. 8: ein Ausschnitt VIII gemäß Figur 4, jedoch in der Ausführungsform des Befestigungselementes gemäß Figur 7,
- Fig. 9: eine Längsschnittansicht des Befestigungssystem in der Festlegungsposition des hier in einer weiteren Ausführungsform dargestellten Ausrichteelements in den Aufnahmen und
- Fig. 10: drei Teilfiguren jeweils mit einer perspektivischen Darstellung zum Einsetzen des Befestigungselements in die Ausrichtungsaufnahme.

In der Beschreibung sind sämtliche Begrifflichkeiten zur Beschreibung der Örtlichkeit wie oben, unten, vorn, hinten, rechts und links so gemeint, wie sie in der jeweiligen Figur selbst gezeigt ist, es sei denn, es ist eigens anders definiert.

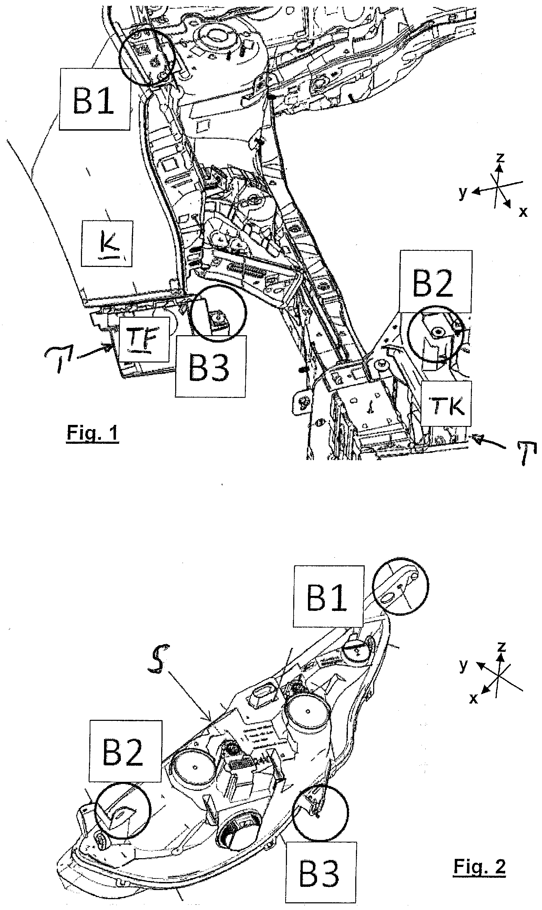

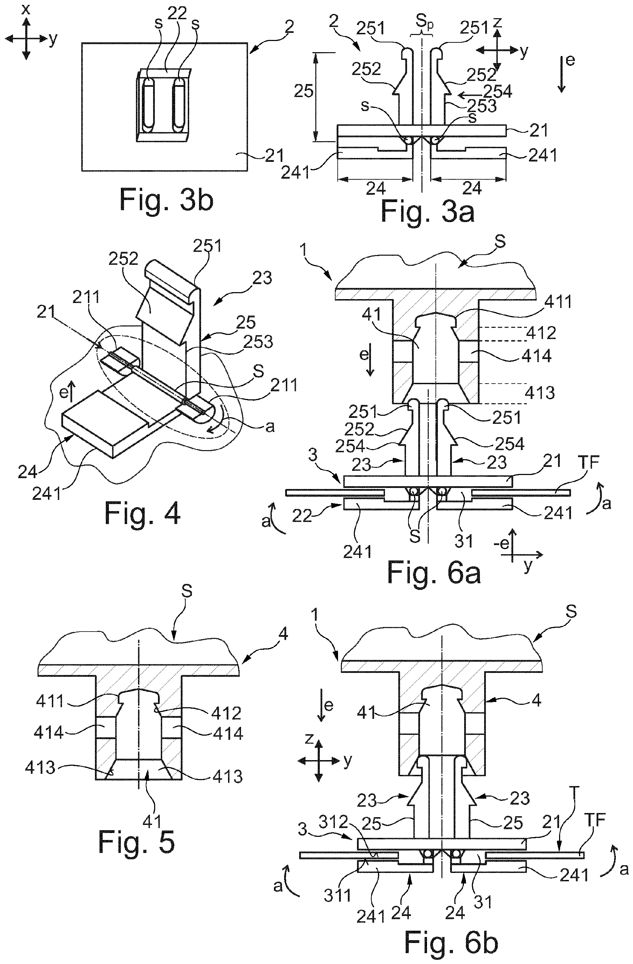

In Figur 1 werden perspektivisch zwei übliche Trägerstrukturen T, d.h. eine übliche Kotflügelbefestigung TF und eine übliche Kühlerträgerstruktur TK, und in Figur 2 perspektivisch eine Scheinwerferstruktur S jeweils mit eingezeichneten Befestigungspunkten B1-B3 gezeigt, an denen die Scheinwerferstruktur S nach der 3-2-1-Regel die Scheinwerferstruktur S an den Trägerstrukturen T festgelegt wird. In den Figuren 3-10 werden in verschiedenen Ansichten und Teilansichten Ausführungsformen eines Scheinwerferbefestigungssystem 1 für hier nicht dargestellte Kraftfahrzeuge zur Befestigung und Ausrichtung der Scheinwerferstruktur S hier bezüglich der x-, y-, und z-Richtungen des Fahrzeugs an den beiden Trägerstrukturen T und zwar allein für den Befestigungspunkt B3 gezeigt. Für den Befestigungspunkt B3 ist gemäß der 3-2-1-Regel zur Befestigung und Ausrichtung der Scheinwerferstruktur S in z-Richtung an den Trägerstrukturen T ein einwertiges Ausrichteelement 2 des Scheinwerferbefestigungssystems 1 vorgesehen.

Das erfindungsgemäße Scheinwerferbefestigungssystem 1 so ausgelegt, dass die Festlegung des ersten Ausrichteelements 2 an den zu verbindenden Strukturen, hier der Kotflügelbefestigungsstruktur TF und der Scheinwerferstruktur S bezüglich der z-Richtung zugleich dessen Festlegung bezüglich der xy-Ebene auslöst. Die zu verbindenden Strukturen werden über das einwertige Ausrichteelement 2 in einer in den Figuren 6a und 6b dargestellten ersten Ausrichtungsposition der x-, y-und z-Richtung des Fahrzeugs relativ verschieblich zueinander gehalten angeordnet. Über das Ausrichteelement 2 zur Ausrichtung in z-Richtung in der Ausrichtungsposition sind die zu verbindenden Strukturen bezüglich der xy-Ebene und bezüglich der z-Richtung lose bleibend zueinander angeordnet. Hierbei beträgt das Spiel bezüglich der z-Richtung hier weniger als +/-3 mm, während das Spiel bezüglich der xy-Ebene hier mehr als +/-3 mm beträgt.

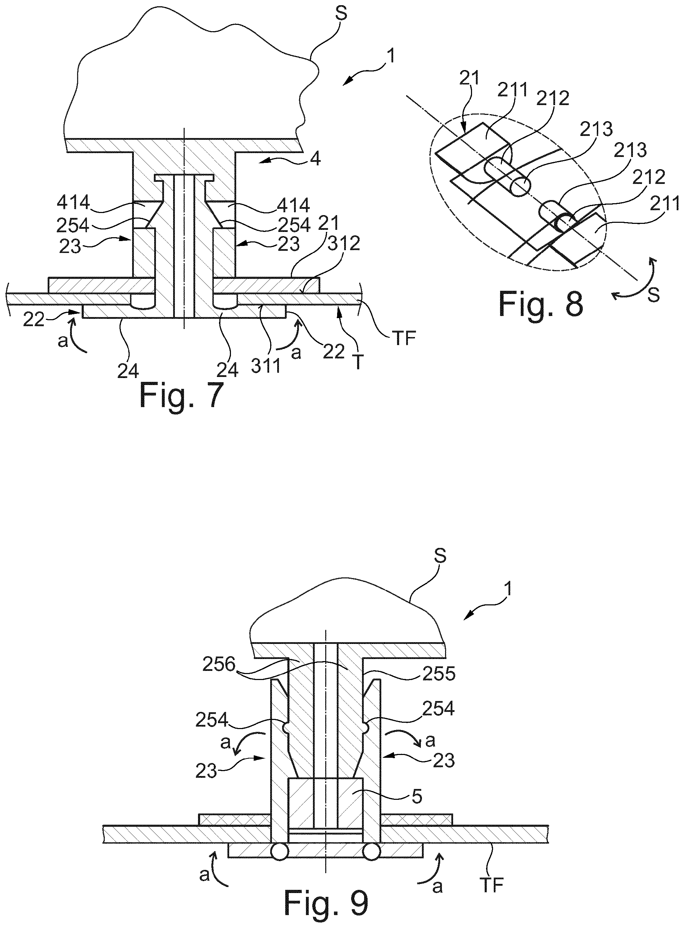

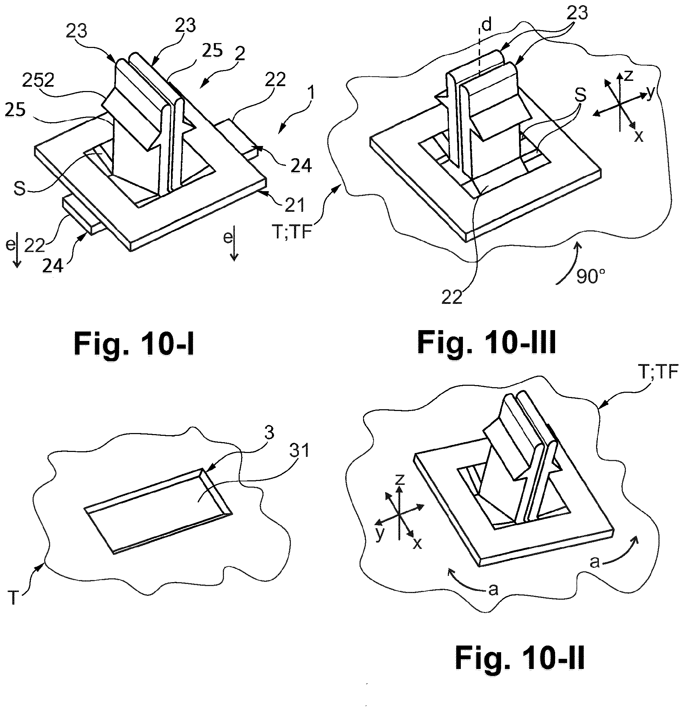

Genauer gesagt ist, wie weiter unten erläutert, die relative Verschieblichkeit des Ausrichteelements 2 in einer ersten Ausrichtungsphase in alle drei Richtungen x,y,z in Figur 6a gegeben, während diese, infolge der fortschreitenden Verbindung der Strukturen S, TF miteinander über das Ausrichteelement 2 gemäß Figur 6b, in eine zweite Ausrichtungsphase übergeht, in der die relative Beweglichkeit in xy-Ebene zunehmend beschränkt wird. Ebenfalls wird in Figur 10-III die Ausrichtungsposition des Scheinwerferbefestigungssystems 1 gezeigt, wobei hier jedoch das Scheinwerferbefestigungssystem nicht vollständig, d.h. ohne die Scheinwerferstruktur mit einer dort vorgesehenen Festlegungsaufnahme dargestellt ist. In den Figuren 7 und 9 ist das Scheinwerferbefestigungssystem 1 jeweils in einer Festlegungsposition gezeigt, in der das Ausrichteelement 2 aus der Ausrichtungsposition in eine Festlegungsposition überführt ist, wobei dieses Überführen in die Festlegungsposition zur Ausrichtung und Festlegung der Strukturen in z-Richtung gleichzeitig mit deren Festlegung in x-Richtung und y-Richtung erfolgt.

Hierbei sind hier an der Kotflügelbefestigungsstruktur TF eine Ausrichtungsaufnahme 3 und an der Scheinwerferstruktur S eine hier als Rastaufnahme ausgebildete Festlegungsaufnahme 4 vorgesehen. Die Ausrichtungsaufnahme 3 weist eine in die Kotflügelbefestigungsstruktur TF eingebrachte Durchgangsöffnung 31 mit länglichem Öffnungsprofil (Figur 10-I) auf, in die das Ausrichteelement 2, in einer Eingriffsrichtung e parallel zur z-Richtung in die Ausrichtungsaufnahme 3 eingebracht, bezüglich der xy-Ebene relativ verschieblich und bezüglich der z-Richtung zur leichteren Verschieblichkeit mit Spiel gehalten ist.

Das Ausrichteelement 2 umfasst als Teil einer Hebelvorrichtung hier zwei Kipphebel 23, die jeweils kraftübertragungswirksam einerseits in die an der Trägerstruktur T vorgesehene Ausrichtungsaufnahme 3 und, hier in z-Richtung beabstandet hierzu, anderseits in die an der Scheinwerferstruktur S vorgesehene Festlegungsaufnahme 4 eingreifen. Die Kipphebel 23 weisen jeweils zwei rechtwinklig zueinander angestellten Hebelarmen, d.h. einen ersten Hebelarm 24 und einen zweiten Hebelarm 25, auf. Der erste Hebelarm 24 greift in Eingriffsrichtung e durch die Durchgangsöffnung 31 in die Ausrichtungsaufnahme 3 und liegt hier in Ausrichtungsposition in xy-Ebene verschieblich und in der Festlegungsposition hier unter elastischer Vorspannung reibschlüssig gegen Eingriffsrichtung e unterseitig an der hintere Seitenfläche 311 der Ausrichtungsaufnahme 3 an.

Die beiden Kipphebel 23 sind zur z-Richtung z radial einander gegenüberliegend und über einen Spalt 26 beabstandet zueinander angeordnet. In der Festlegungsposition sind ihre zweiten Hebelarme 25 parallel zueinander und sich in z-Richtung z erstreckend und ihre ersten Hebelarme bezüglich der Eingriffsrichtung e radial voneinander weg weisend angeordnet.

Das Ausrichteelement 2 greift klammerartig an den den Öffnungsrand der Durchgangsöffnung 31 oben und unten begrenzenden Seitenflächen, der in Eingriffsrichtung hintere Seitenfläche 311 und der in Eingriffsrichtung e vordere Seitenfläche 312, an. Hierzu weist das Ausrichteelement 2 ein vorderes Klammerteil 21, das in Eingriffsrichtung e anschlagswirksam an der vorderen Seitenfläche 311 anliegt. Das vordere Klammerteil 21 ist plattenartig und bezüglich der Eingriffsrichtung e sich radial nach außen von dem Ausrichteelement erstreckend ausgebildet. Ferner ist ein hinteres Klammerteil 22 vorgesehen, das durch den ersten Hebelarm 24 gebildet ist.

Die Kipphebel 23 sind jeweils in einer Scharnierverbindung an dem Ausrichtungselement 2 an dem vorderen Klammerteil 21 um eine Schwenkachse s verschwenkbar gelagert und in einer Anlagedrehrichtung a gegen die hintere Seitenfläche 311 in die Festlegungsposition hinein verschwenkbar angeordnet. Hierbei wird ein die Durchgangsöffnung 31 in Eingriffsrichtung e überragender Abschnitt 241 des ersten Hebelarms 24 in gegen die hinteren Seitenfläche 311 in der Ausrichtungsposition mit Spiel und in der Festlegungsposition hier zur reibschlüssigen Anlage gebracht (Figur 6). Wie aus den Figuren leicht ableitbar, schlagen die Kipphebel 23 zur Begrenzung der Verschwenkung gegen Anlagedrehrichtung a aneinander an.

Wie Figur 10 entnehmbar, weist der erste Hebelarm 24 bezüglich der z-Richtung z einen länglichen Querschnitt auf, an den der Öffnungsquerschnitt der Durchgangsöffnung 31 mit Übermaß angepasst ausgebildet ist. In einem ersten Schritt (Figur 10-I) wird der erste Hebelarm 24 mit seinem Abschnitt 241 durch die Durchgangsöffnung 31 in die Ausrichtungsaufnahme 3 in eine Einsatzposition hinein eingesetzt, wobei der erste Hebelarm mit seinem Querschnitt etwa fluchtend zum Öffnungsquerschnitt der Durchgangsöffnung 31 angeordnet ist und das vordere Klemmteil 21 in Eingriffsrichtung e vorn an der vorderen Seitenfläche 312 anschlägt. Das plattenförmige vordere Klammerteil 21 ist hinsichtlich seiner Erstreckung in xy-Ebene so dimensioniert, dass es in keiner Drehstellung des Ausrichteelements 2 relativ zur Durchgangsöffnung 31 durch dieselbe geführt werden kann und ist somit in Einsetzrichtung e stets anschlagswirksam.

In einem zweiten Schritt (Figur 10-II) wird Ausrichteelement 2 unter einer Drehbewegung gemäß dem eingezeichneten Richtungspfeil um 90° aus der Einsatzposition in die Ausrichtungsposition gebracht. Da der Öffnungsquerschnitt der Durchgangsöffnung 31 gegenüber dem ersten Hebelarm 24 ein Übermaß aufweist, kann der erste Hebelarm 24 und damit das Ausrichteelement 2 bezüglich der xy-Ebene relativ zur Durchgangsöffnung 31 in derselben verschieblich. Diese Relativbewegung in xy-Ebene ist durch die radiale Begrenzung der Durchgangsöffnung 31 begrenzt.

In einem dritten Schritt (Figur 10-III) wird der erste Hebelarm 24 zu seiner Funktion als hinteres Klammerteil 22 über die Betätigung des Kipphebels 23 an dessen zweitem Hebelarm 25 in Festlegungsdrehrichtung zu dem vorderen Klammerteil 21 hin und damit unter reibschlüssiger Anlage gegen die in Eingriffsrichtung e hintere Seitenfläche 311 gepresst. Damit ist das Ausrichteelement 2 hier an der Kotflügelbefestigungsstruktur TF festgelegt.

Die Betätigung der Kipphebel 23 erfolgt durch deren Eingreifen in die Festlegungsaufnahme 4. Dies ist rein schematisch in den Figuren 6 a und 6 b gezeigt und wird im Zusammenhang mit der weiteren Ausbildung der Kipphebel 23 Ziffer 3 und Ziffer 4 sowie der Festlegungsaufnahme 4 gemäß Figur 5 erläutert. Die beiden Kipphebel 23 sind bezüglich einer Spiegelsymmetrieebene sp hier senkrecht zur y-Richtung y spiegelsymmetrisch ausgebildet und angeordnet. Der zweite Hebelarm 25 ist an seinem freien Ende 251 in hier y-Richtung y weisend hakenartig gerundet ausgebildet. Von dem freien Ende 251 in Eingriffsrichtung e beabstandet, weist der zweite Hebelarm 25 eine mit einer Richtungskomponenten gegen Eingriffsrichtung e weisenden Rampe 252 auf. Entsprechend diesem Aufbau des bzw. der Kipphebel 23, weist die Festlegungsaufnahme 4 zur Ausbildung einer Rastverbindung mit dem zugeordneten Kipphebel 23 eine in Eingriffsrichtung e trichterförmig geöffnete Rastöffnung 41 mit einer dem hakenartig gerundetem Ende 251 des zweiten Hebelarms 25 angepassten Hinterschneidung 411 auf. In Eingriffsrichtung e hieran anschließend ist eine erste Rampe 412 und ausgangsseitig der Rastöffnung 41 eine zweite Rampe 413 vorgesehen. Beide Rampen 412, 413 weisende mit einer Richtungskomponente in Eingriffsrichtung e. Zudem ist in etwa halber Höhe eine weitere Durchgangsöffnung 414 zur weiteren Verrastung des zweiten Hebelarms 25 angeordnet.

Da diese Durchgangsöffnung 414 radial nach außen verläuft und damit von außen zugänglich ist, kann die Verrastung auf einfache Weise beispielsweise mittels eines radial von außen in die Durchgangsöffnung eingeführten Stößels gelöst werden, indem dieser radial nach innen und in Eingriffsrichtung e an den zugeordneten zweiten Hebelarm angreift und ihn aus der Verrastung löst. Dies kann beispielsweise im Falle einer Reparatur oder Austauschs der Scheinwerferstruktur genutzt werden.

Zu den Figuren 6a und 6b gewandt, so ist in Figur 6a gezeigt, wie die Scheinwerferstruktur S mit der Festlegungsaufnahme 4 in Eingriffsrichtung e so über das bereits mit der Kotflügelbefestigungsstruktur TF in xy-Ebene verschieblich verbundene Ausrichteelement 2 gebracht ist, dass einer der Kipphebel 23 mit seinem freien Ende 251 an der hier linken zweiten Rampe 413 anstößt. Damit wird das Ausrichteelement 2 quasi von der Rastöffnung 41 eingefangen und in die Ausrichtungsposition gebracht. Mit weiterem Absenken der Festlegungsaufnahme 4 über das Ausrichteelement 2 gleitet der hier linke Kipphebel 23 mit seinem hakenartig gerundetem Ende 251 an der hier linken zweiten Rampe 413 ab, wodurch das Ausrichteelement 2 in der Ausrichteraufnahme 3 hier in eingezeichneter y-Richtung y, d.h. hier nach rechts, bewegt wird, bis beide Kipphebel 23, wie in Figur 6b gezeigt, an der jeweils zugeordneten zweiten Rampe 413 anliegen. In dieser Position ist das Ausrichteelement 2 weiterhin in xy-Ebene verschieblich in der Ausrichtungsaufnahme 3 angeordnet, so dass diese Ausrichtung des Ausrichteelements 2 ohne Verspannung bezüglich der xy-Ebene erfolgt ist.

Mit einem weiteren Absenken der Festlegungsaufnahme 4 der Scheinwerferstruktur S über die Kipphebel 23 werden diese mit ihrem freien Ende 251 weiter zu der jeweils zugeordneten Rastöffnung 41 hin geführt, wobei sie, unter Abgleitung an der ersten Rampe 412 in Anlagedrehrichtung a verschwenkt werden und mit ihrem hakenartigen Ende 251 in die Rastöffnung 41 einrasten. Mit diesem abgleiten an der ersten Rampe 412 werden die Kipphebel 23 in Anlagedrehrichtung a so verschwenkt, dass sie mit ihrem ersten Hebelarm 24 unter elastischer Vorspannung reibschlüssig an der hinteren Seitenfläche 311 anliegen. Somit erfolgt mit dem Aufsetzen der Festlegungsaufnahme 4 über den zweiten Hebelarm 25 nach der Ausrichtung bezüglich der xy-Ebene die Festlegung des Ausrichteelement 2 an den verbindenden Strukturen S, TF gleichzeitig bezüglich aller Richtungen x,y,z.

In Eingriffsrichtung e hinter der Rampe 252 des zweiten Hebelarms 25 ist ein Rücksprung 253 vorgesehen, durch den dieser Bereich der zweiten Rampe 252 ebenfalls als Rastvorsprung 254 dient. Hierbei greift dieser durch den Rücksprung 253 gebildete Rastvorsprung 254, wie Figur 7 entnehmbar, verrastend in die Durchgangsöffnung 414 der Festlegungsaufnahme 4 ein und stützt sich in Eingriffsrichtung e an der Durchgangsöffnung 414 ab. Damit wird in Stabilisierung der Rastverbindung eine zweite Verrastung hergestellt.

In der Ausbildungsform des Scheinwerferbefestigungssystems 1 mit dem Ausrichteelement 2 gemäß Figuren 3 und 4 ist die Schwenkachse s als eigenständiges Bauteil ausgeführt, das, wie in Figur 4 angedeutet, in einer an dem vorderen Klammerteil 21 vorgesehenen Aufnahme 211 drehbar gelagert ist. Hierin besteht der wesentliche Unterschied zwischen dieser Ausführungsform des Scheinwerferbefestigungssystems 1 gemäß Figur 6 und der gemäß Figur 7. Wie insbesondere Figur 8 ersichtlich, wird die Schwenkachse s bei der Ausführungsform des Scheinwerferbefestigungssystem 1 gemäß Figur 7 durch das vordere Klammerteil 21 gebildet, indem dieses als Schwenkachse s bezüglich derselben einander zugewandte axiale zylindrische Vorsprünge 212 aufweist, die mit dem vorderen Klammerteil 21 einstückig verbunden sind. In Einbaulage greifen diese in an dem Kipphebel vorgesehene zylindrische Öffnungen 213 ein. Stattdessen können auch Klammerteil 21 und die Kipphebel 23 jeweils einstückig über Bolzenabschnitte miteinander verbunden sein, die zur Verdrehung tordiert werden.

Die Festlegungsaufnahme 4 liegt in Eingriffsrichtung e hier unmittelbar an dem vorderen Klammerteil 21 stirnseitig an, wodurch die Stabilität der Rastverbindung gesteigert wird. Dies ist in Figur 7 anhand einer weiteren Ausführungsform des Ausrichteelement 2 gezeigt und ferner leicht aus den in Figur 6 Proportionen des Ausrichteelement 2 und zwar die der Rastöffnung 41 im Verhältnis zu denen der Festlegungsaufnahme 4 ableitbar.

In der Ausführungsform des Befestigungssystems 1 gemäß Figur 9 erfolgt eine Umkehrung der baulichen Anordnung, ohne jedoch ein anderes Funktionsprinzip aufzuweisen: Hier bilden die beiden Kipphebel 23 eine Aufnahme 255 für die Festlegungsaufnahme 4, die hier in Form von zwei Schwenkhebeln 256 in die Aufnahme 255 verrastend eingreift. Damit ergibt sich eine Umkehrung der Verschwenkung der Kipphebel 23, indem diese in Anlagedrehrichtung a bezüglich der Eingriffsrichtung e radial nach außen verschwenkt werden. Hierbei greift der hier linke Kipphebel 23 mit seinem ersten Hebelarm 24 rechts von dem hier rechten Kipphebel 23 und umgekehrt der hier rechten Kipphebel 23 mit seinem ersten Hebelarm in Ziffer 24 links von dem hier linken Kipphebel 23 an.

Abweichend von den hier gezeigten übrigen Ausführungsformen des Befestigungssystems 1, ist in der Ausführungsform des Befestigungssystems 1 gemäß den Figuren 7 und 8 zwischen Festlegungsaufnahme 4 und vorderen Klammerteil 21 ein Beabstandungselement Ziffer 5 vorgesehen, über die sich die Festlegungsaufnahme 4 an dem vorderen Klammerteil 21 abstützt.

### Bezugszeichenliste

- 1: Scheinwerferbefestigungssystem
- 2: Ausrichteelement
- 21: vorderes Klammerteil
- 211: Aufnahme
- 212: Vorsprung
- 213: Öffnung
- 22: hinteres Klammerteil
- 23: Kipphebel
- 24: erster Hebelarm
- 241: Abschnitt
- 25: zweiter Hebelarm
- 251: Ende
- 252: Rampe
- 253: Rücksprung
- 254: Rastvorsprung
- 255: Aufnahme
- 256: Schwenkhebel
- 26: Spalt
- 3: Ausrichtungsaufnahme
- 31: Durchgangsöffnung
- 311: hintere Seitenfläche
- 312: vordere Seitenfläche
- 4: Festlegungsaufnahme
- 41: Rastöffnung
- 411: Hinterschneidung
- 412: erste Rampe
- 413: zweite Rampe
- 414: Durchgangsöffnung
- 5: Beabstandungselement
- a: Anlagedrehrichtung
- d: Drehachse
- s: Schwenkachse
- sp: Spiegelsymmetrieebene
- x: x-Richtung
- y: y-Richtung
- z: z-Richtung
- K: Kotflügel
- S: Scheinwerferstruktur
- T: Trägerstruktur
- TF: Kotflügelbefestigungsstruktur
- TK: Kühlerträgerstruktur

## Patentansprüche

1. Scheinwerferbefestigungssystem (1) für ein Kraftfahrzeug zur Befestigung und Ausrichtung einer Scheinwerferstruktur (S) an zwei Trägerstrukturen (T) des Kraftfahrzeugs, insbesondere an einer Kotflügelbefestigungsstruktur (TF) und einer Kühlerträgerstruktur (TK), bezüglich von drei zueinander senkrecht stehenden x-, y- und z-Raumrichtungen, insbesondere der x-, y- und z-Richtung des Fahrzeugs, mit einem einwertigen Ausrichteelement (2) zur Befestigung und Ausrichtung der Scheinwerferstruktur (S) in z-Richtung (z) an einer der Trägerstrukturen (T),
wobei das Scheinwerferbefestigungssystem (1) so ausgelegt ist, dass die zu verbindenden Strukturen (S, TF, TK) über das einwertige Ausrichteelement (2) in einer Ausrichtungsposition bezüglich der x-, y- und z-Raumrichtungen, insbesondere der x-, y,- und z-Richtung des Fahrzeugs, relativ verschieblich zueinander gehalten angeordnet sind,
wobei
das Überführen des Ausrichteelements (2) aus der Ausrichtungsposition in eine Festlegungsposition zur Ausrichtung und Festlegung der Strukturen (S, TF, TK) in z-Richtung (z) gleichzeitig deren Festlegung in x-Richtung (x) und y-Richtung (y) bewirkt,
wobei
das Ausrichteelement (2) zur Ausrichtung in z-Richtung (z) in der Ausrichtungsposition die zu verbindenden Strukturen (S, TF, TK) bezüglich der xy-Ebene lose bleibend zueinander ausrichtet,
wobei an der einen Trägerstruktur (T) oder der Scheinwerferstruktur (S) eine Ausrichtungsaufnahme (3) vorgesehen ist und
wobei
das Ausrichteelement (2) in der Ausrichtungsposition bezüglich der xy-Ebene verschieblich und bezüglich der z-Richtung (z) klammerartig in die Ausrichtungsaufnahme (3) eingreift und in der Festlegungsposition mit Schließen des klammerartigen Eingriffs an der Ausrichtungsaufnahme (3) festgelegt angeordnet ist.

2. Scheinwerferbefestigungssystem (1) nach Anspruch 1,
**dadurch gekennzeichnet,**
**dass** das Ausrichteelement (2) zu seinem klammerartigen Eingriff, bezüglich einer Eingriffsrichtung (e) parallel oder etwa parallel zur z-Richtung (z), ein vorderes Klammerteil (21) und ein hinteres Klammerteil (22) aufweist, wobei das vordere Klammerteil (21) als ein in Eingriffsrichtung (e) wirksamer Anschlag ausgebildet ist, und
**dass** das vordere Klammerteil (21) bezüglich der Eingriffsrichtung (e) sich radial nach außen von dem Ausrichteelement (2) erstreckend ausgebildet ist.

3. Scheinwerferbefestigungssystem (1) nach Anspruch 2,
**dadurch gekennzeichnet,**
**dass** das hintere Klammerteil (22) des Ausrichteelements (2) mittels zumindest eines Hebels einer Hebelvorrichtung gebildet ist.

4. Scheinwerferbefestigungssystem (1) nach Anspruch 3,
**dadurch gekennzeichnet,**
**dass** der Hebel als Kipphebel (23) ausgebildet ist, der in der Festlegungsposition die zu verbindenden Strukturen (S, TF, TK) kraftübertragungswirksam verbindend angeordnet ist und um eine Schwenkachse (s) senkrecht zur z-Richtung schwenkbeweglich an dem Ausrichteelement (2), insbesondere an dem vorderen Klammerteil (21), gelagert angeordnet ist.

5. Scheinwerferbefestigungssystem (1) nach Anspruch 3 oder 4,
**dadurch gekennzeichnet,**
**dass** der Hebel kraftübertragungswirksam einerseits in die an einer der Trägerstrukturen (T) bzw. an der Scheinwerferstruktur (S) vorgesehene Ausrichtungsaufnahme (3) und, beabstandet hierzu, anderseits in eine an der Scheinwerferstruktur (S) bzw. der einen Trägerstruktur (T) vorgesehene Festlegungsaufnahme (4) eingreifend angeordnet ist.

6. Scheinwerferbefestigungssystem (1) nach Anspruch 4 oder 5,
**dadurch gekennzeichnet,**
**dass** der Kipphebel (23) zwei von der Schwenkachse (s) ausgehende winklig, vorzugsweise senkrecht zueinander angestellte Hebelarme, d.h. einen ersten Hebelarm (24) und einen zweiten Hebelarm (25), aufweist, wobei der erste Hebelarm (24) in der Festlegungsposition kraftübertragungswirksam in die Ausrichtungsaufnahme (3) der einen Trägerstruktur (T) bzw. der Scheinwerferstruktur (S) und der zweite Hebelarm (25) in der Festlegungsposition kraftübertragungswirksam in eine an der Scheinwerferstruktur (S) bzw. der Trägerstruktur (T) vorgesehene Festlegungsaufnahme (4) eingreifend angeordnet sind.

7. Scheinwerferbefestigungssystem (1) nach Anspruch 6,
**dadurch gekennzeichnet,**
**dass** die Festlegungsaufnahme (4) als Rastaufnahme mit einer in Eingriffsrichtung (e) trichterförmig geöffneten Rastöffnung (41) ausgebildet ist, in die der zweite Hebelarm (25) des Kipphebels (13) gegen Eingriffsrichtung (e) unter Verschwenkung des ersten Hebelarms des Kipphebels (13) in die Festlegungsposition hinein verrastend eingreift.

8. Scheinwerferbefestigungssystem (1) nach Anspruch 6 oder 7,
**dadurch gekennzeichnet,**
**dass** die Ausrichtungsaufnahme (3) eine Durchgangsöffnung (31) aufweist, die der erste Hebelarm (24) des Kipphebel (23) durchragt, wobei der erste Hebelarm in der Ausrichtungsposition gegen Eingriffsrichtung (e) zumindest mit Spiel beabstandet zu einer die Durchgangsöffnung (31) begrenzende in Eingriffsrichtung (e) hinteren Seitenfläche (311) angeordnet und in der Festlegungsposition an derselben form-, kraft- und/oder stoffschlüssig anliegt.

9. Scheinwerferbefestigungssystem (1) nach Anspruch 8,
**dadurch gekennzeichnet,**
**dass** das Öffnungsprofil der Durchgangsöffnung (31) und das Längsprofil des ersten Hebelarms (24) länglich ausgebildet und aneinander angepasst sind, wobei das Längsprofil gegenüber dem Öffnungsprofil ein Untermaß aufweist.

10. Scheinwerferbefestigungssystem (1) nach einem der Ansprüche 4 bis 9, **dadurch gekennzeichnet,**
**dass** das hintere Klammerteil (22) mittels zwei gleich wirkender Kipphebel (23) gebildet wird, die bezüglich der Eingriffsrichtung (e) radial einander gegenüberliegend angeordnet sind.

## Claims

1. Headlamp fastening system (1) for a motor vehicle for fastening and aligning a headlamp structure (S) on two support structures (T) of the motor vehicle, in particular on a vehicle wing fastening structure (TF) and a radiator mounting structure (TK), in respect of three x-, y- and z- spatial directions perpendicular to one another, in particular the x-, y- and z-direction of the vehicle, with a 1-valued alignment element (2) for fastening and aligning the headlamp structure (S) in the z-direction (z) on one of the support structures (T),
wherein
the headlamp fastening system (1) is designed in such a manner that the structures to be connected (S, TF, TK) are arranged held relatively displaceably to one another via the 1-valued alignment element (2) in an alignment position in respect of the x-, y- and z- spatial directions, in particular the x-, y- and z-direction of the vehicle, wherein the transfer of the alignment element (2) from the alignment position into a fixing position for aligning and fixing the structures (S, TF, TK) in the z-direction (z) simultaneously brings about the fixing thereof in the x-direction (x) and the y-direction (y),
wherein the alignment element (2) for alignment in the z-direction (z) in the alignment position aligns the structures to be connected (S, TF, TK) in respect of the xy-plane in such a manner that they remain loose to one another,
wherein
on the one support structure (T) or the headlamp structure (S) an alignment receiving means (3) is provided and wherein the alignment element (2) engages with the alignment receiving means (3) in the alignment position displaceably in respect of the xy-plane and in a clamp-like manner in respect of the z-direction (z) and is arranged fixed in the fixing position with closure of the clamp-like engagement at the alignment receiving means (3) .

2. Headlamp fastening system (1) according to Claim 1,
**characterized in that**
the alignment element (2) has a front clamp part (21) and a rear clamp part (22) parallel or roughly parallel to the z-direction (z) with respect to an engagement direction (e) for its clamp-like engagement, wherein the front clamp part (21) is configured as a stop that is effective in the engagement direction (e), and
**in that** the front clamp part (21) is arranged extending radially outwardly from the alignment element (2) in respect of the engagement direction (e).

3. Headlamp fastening system (1) according to Claim 2,
**characterized in that**
the rear clamp part (22) of the alignment element (2) is formed by means of at least one lever of lever device.

4. Headlamp fastening system (1) according to Claim 3,
**characterized in that**
the lever is configured as a tilting lever (13) which is arranged connecting the structures to be connected (S, TF, TK) in an effective force-transmitting manner in the fixing position and is arranged mounted about a pivot axis (s) perpendicularly to the z-direction in a pivotably movable manner on the alignment element (2), particularly on the front clamp part (21).

5. Headlamp fastening system (1) according to Claim 3 or 4,
**characterized in that**
the lever is arranged engaged, on the one hand, in an effectively force-transmitting manner with the alignment receiving means (3) provided on one of the support structures (T) or on the headlamp structure (S) and, spaced apart therefrom, on the other hand, with a fixing receiving means (4) provided on the headlamp structure (S) or the one support structure (T).

6. Headlamp fastening system (1) according to Claim 4 or 5,
**characterized in that**
the tilting lever (23) has two lever arms emerging at angles from the pivot axis (s), preferably lever arms disposed perpendicularly to one another, i.e. a first lever arm (24) and a second lever arm (25), wherein the first lever arm (24) is arranged in the fixing position engaging in an effective force-transmitting manner with the alignment receiving means (3) of the one support structure (T) or the headlamp structure (S) and the second lever arm (25) is arranged in the fixing position engaging in an effective force-transmitting manner with a fixing receiving means (4) provided on the headlamp structure (S) or else the support structure (T).

7. Headlamp fastening system (1) according to Claim 6,
**characterized in that**
the fixing receiving means (4) is configured as a catch receiving means with a catch opening (41) opened in conical form in the engagement direction (e), with which the second lever arm (25) of the tilting lever (13) engages in a latching manner against the engagement direction (e) with pivoting of the first lever arm of the tilting lever (13) into the fixing position.

8. Headlamp fastening system (1) according to Claim 6 or 7,
**characterized in that**
the alignment receiving means (3) has a through-opening (31) which protrudes beyond the first lever arm (24) of the tilting lever (23), wherein the first lever arm in the alignment position against the engagement direction (e) is arranged spaced apart at least with play relative to a rear side surface (311) delimiting the through-opening (31) in the engagement direction (e) and bears against the same in a positive-locking, frictional and/or substance-bonded manner in the fixing position.

9. Headlamp fastening system (1) according to Claim 8,
**characterized in that**
the opening profile of the through-opening (31) and the longitudinal profile of the first lever arm (24) are elongate and adapted to one another, wherein the longitudinal profile exhibits an undersize in respect of the opening profile.

10. Headlamp fastening system (1) according to one of Claims 4 to 9,
**characterized in that**
the rear clamp part (22) is formed by means of two tilting levers (23) acting in the same way which are arranged radially opposite one another in respect of the engagement direction (e).

## Revendications

1. Système de fixation de phare (1) destiné à un véhicule automobile pour fixer et orienter une structure de phare (S) au niveau de deux structures de support (T) du véhicule automobile, en particulier d'une structure de fixation d'aile (TF) et d'une structure de support de radiateur (TK), par rapport à trois directions spatiales x, y et z perpendiculaires les unes aux autres, en particulier les directions x, y et z du véhicule,
le système de fixation de phare comprenant un élément d'orientation monovalent (2) destiné à la fixation et l'orientation de la structure de phare (S) dans la direction z (z) au niveau de l'une des structures de support (T),
le système de fixation de phare (1) étant conçu de telle sorte que les structures (S, TF, TK) à relier soient disposées dans une position d'orientation par rapport aux directions spatiales x, y et z, en particulier aux directions x, y, et z du véhicule, par le biais de l'élément d'orientation monovalent (2) en étant maintenues de manière à pouvoir coulisser les unes par rapport aux autres,
le passage de l'élément d'orientation (2) de la position d'orientation à une position de fixation pour orienter et fixer les structures (S, TF, TK) dans la direction z (z) entraînant simultanément leur immobilisation dans la direction x (x) et la direction y (y),
l'élément d'orientation (2) destiné à effectuer l'orientation dans la direction z (z) dans la position d'orientation orientant les structures à relier (S, TF, TK) les unes par rapport aux autres en restant lâche par rapport au plan x-y,
un logement d'orientation (3) étant prévu au niveau de la structure de support (T) ou de la structure de phare (S) et
l'élément d'orientation (2) s'engageant dans le logement d'orientation (3) de manière coulissante par rapport au plan x-y dans la position d'orientation et à la manière d'une bride par rapport à la direction z (z) et étant disposé de manière immobile dans la position d'immobilisation par fermeture de l'engagement de type bride au niveau du logement d'orientation (3).

2. Système de fixation de phare (1) selon la revendication 1,
**caractérisé en ce que**
l'élément d'orientation (2) comporte une partie bride avant (21) et une partie bride arrière (22) en vue de son engagement de type bride par rapport à une direction d'engagement (e) parallèle ou à peu près parallèle à la direction z (z), la partie bride avant (21) étant conçue comme une butée agissant dans la direction de l'engagement (e), et **en ce que**
la partie bride avant (21) est conçue de manière à s'étendre radialement vers l'extérieur depuis l'élément d'orientation (2) par rapport à la direction d'engagement (e).

3. Système de fixation de phare (1) selon la revendication 2,
**caractérisé en ce que**
la partie bride arrière (22) de l'élément d'orientation (2) est formée au moyen d'au moins un levier d'un dispositif à levier.

4. Système de fixation de phare (1) selon la revendication 3,
**caractérisé en ce que**
le levier est conçu comme un levier basculant (23) qui est disposé, dans la position d'immobilisation, de manière à relier les structures à relier (S, TF, TK) de façon à transmettre une force et est disposé de manière à être logé au niveau de l'élément d'orientation (2), en particulier de la partie bride avant (21), de façon à pouvoir pivoter sur un axe de pivotement (s) perpendiculaire à la direction z.

5. Système de fixation de phare (1) selon la revendication 3 ou 4,
**caractérisé en ce que**
le levier est disposé de manière à s'engager avec transmission de force d'une part dans le logement d'orientation (3), prévu au niveau de l'une des structures de support (T) ou de la structure de phare (S), et à distance de celui-ci dans un logement d'immobilisation (4) prévu au niveau de la structure de phare (S) ou de la structure de support (T).

6. Système de fixation de phare (1) selon la revendication 4 ou 5,
**caractérisé en ce que**
le bras basculant (23) comporte deux bras de levier, c'est-à-dire un premier bras de levier (24) et un deuxième bras de levier (25), qui sont placés angulairement depuis l'axe de pivotement (s), de préférence perpendiculairement l'un à l'autre, le premier bras de levier (24) étant disposé de manière à s'engager avec transmission de force dans la position d'immobilisation dans le logement d'orientation (3) d'une structure de support (T) ou de la structure de phare (S) et le deuxième bras de levier (25) est disposé de manière à s'engager avec transmission de force dans la position d'immobilisation dans un logement d'immobilisation (4) prévu au niveau de la structure de phare (S) ou de la structure de support (T) .

7. Système de fixation de phare (1) selon la revendication 6,
**caractérisé en ce que**
le logement d'immobilisation (4) est conçu comme un logement d'encliquetage pourvu d'une ouverture d'encliquetage (41) qui est ouverte en forme d'entonnoir dans la direction d'engagement (e) et dans laquelle le deuxième bras de levier (25) du levier basculant (13) s'engage avec encliquetage à l'opposé de la direction d'engagement (e) par pivotement du premier bras de levier du bras basculant (13) dans la position d'immobilisation.

8. Système de fixation de phare (1) selon la revendication 6 ou 7,
**caractérisé en ce que**
le logement d'orientation (3) comporte une ouverture traversante (31) par laquelle le premier bras de levier (24) du bras basculant (23) fait saillie, le premier bras de levier étant disposé dans la position d'orientation, opposée à la direction d'engagement (e), en étant espacé au moins avec jeu d'une surface latérale (311) arrière, par référence à la direction d'engagement (e), qui délimite l'ouverture traversante (31) et, dans la position d'immobilisation, vient en appui sur ladite surface latérale par complémentarité de formes, en force et/ou par liaison de matière.

9. Système de fixation de phare (1) selon la revendication 8,
**caractérisé en ce que**
le profil de l'ouverture traversante (31) et le profil longitudinal du premier bras de levier (24) sont conçus pour être allongés et sont adaptés l'un à l'autre, le profil longitudinal ayant une taille inférieure à celle du profil d'ouverture.

10. Système de fixation de phare (1) selon l'une des revendications 4 à 9,
**caractérisé en ce que**
la partie bride arrière (22) est formée au moyen de deux leviers basculants (23) à action identique qui sont disposés radialement à l'opposé l'un de l'autre par rapport à la direction d'engagement (e).
